# EUROPÄISCHE PATENTSCHRIFT

(11) **EP 0 981 501 B1**
(45) Veröffentlichungstag und Bekanntmachung des Hinweises auf die Patenterteilung: **08.08.2001**
(21) Anmeldenummer: 98928278.5
(22) Anmeldetag: 15.05.1998
(51) Int. Cl.: C03B 19/02, C03B 20/00

(54) **VERFAHREN UND VORRICHTUNG ZUR HERSTELLUNG EINER HOMOGENEN, SCHLIERENFREIEN QUARZGLASPLATTE**
METHOD AND DEVICE FOR PRODUCING A HOMOGENOUS SHEET OF QUARTZ GLASS WITHOUT STREAKS
PROCEDE ET DISPOSITIF POUR LA PRODUCTION D'UNE PLAQUE DE VERRE DE QUARTZ HOMOGENE SANS STRIES

(30) Priorität: 15.05.1997 DE 19720259
(43) Veröffentlichungstag der Anmeldung: 01.03.2000
(73) Patentinhaber: Schott ML GMBH, 07745 Jena (DE)
(72) Erfinder: CORIAND, Frank, D-07745 Jena (DE); MENZEL, Andreas, D-07745 Jena (DE); NADRAG, Walter, A-9530 Bad Bleiberg (AT); SCHMIDT, Wolfgang, D-07743 Jena (DE)
(74) Vertreter: Bock, Gerhard, Dipl.-Ing.
(86) Internationale Anmeldenummer: EP9802887
(87) Internationale Veröffentlichungsnummer: WO9851630

(56) Entgegenhaltungen:
- WO-A-97/10184
- DE-A- 3 226 451
- DE-A- 4 204 406
- US-A- 2 382 187

## Beschreibung

Die Erfindung betrifft ein Verfahren und eine Vorrichtung zur Herstellung einer homogenen, schlierenfreien Quarzglasplatte gemäß der Gattung der Patentansprüche.

Bei der Herstellung von Quarzglasplatten kommt es auf die Blasenfreiheit, Schlierenfreiheit und Homogenität bezüglich der Brechzahl an. In der DE-C2-32 26 451 werden hierzu ein Verfahren und eine Vorrichtung angegeben, bei denen ein frei hängender Quarzglasvollzylinder mit seinem freien Ende in einen mit Inertgas gefluteten Kessel und in einen darin befindlichen Graphittiegel hineinragt. Darin wird der Quarzglasvollzylinder auf seine Fließtemperatur erhitzt, nach Erreichen seiner Fließtemperatur auf den Graphittiegelboden abgesenkt und zum Zwecke seines Abschmelzens nachgeführt. Abgesehen davon, daß es hierzu eines erheblichen technologischen Aufwandes bedarf, ist die Aufhängung wenig stabil und die Ausbeute an Quarzglas mit geringen Brechzahländerungen sehr beschränkt. Darüber hinaus ist die Entnahme des Restes des Quarzglasvollzylinders erst nach dem Erkalten der Vorrichtung möglich. Damit sind ein hoher Aufwand und Glasverluste verbunden.

Aufgabe der Erfindung ist daher die Schaffung eines Verfahrens und einer Vorrichtung, die technologisch mit geringem Aufwand funktionieren und verbesserte Qualitätsmerkmale, insbesondere die Brechzahlhomogenität, über einen großen Plattenbereich ermöglichen.

Gemäß der Erfindung wird diese Aufgabe durch die Merkmale des ersten bzw. achten Patentanspruchs gelöst. Ein vorzugsweise zylindrischer und zumindest in Längsrichtung optisch schlierenfreier Quarzglaskörper als Vorform mit relativ kleinem Querschnitt wird in eine Platte mit nahezu beliebiger Gestalt und Ausdehnung umgeformt, die einen relativ großen Homogenitätsbereich aufweist und nur durch die Geometrie eines günstigerweise aus Graphit bestehenden Schmelztiegels, einer Graphitform, bestimmt ist. Dabei ist die erfindungsgemäße, quer zur Längsachse des Quarzglasstabes gerichtete Relativbewegung von Quarzglaskörper und Schmelztiegel vorzugsweise eine Rotationsbewegung um eine im wesentlichen parallel zur eben genannten Längsachse gerichtete Achse. Die erfindungsgemäße Relativbewegung kann sich also aus einer einmaligen Querverschiebung und einer ständigen Rotationsbewegung zusammensetzen. Zur Durchführung der Relativbewegung zwischen Quarzglasstab und Schmelztiegel wird günstigerweise nur der Quarzglasstab oder der Schmelztiegel bewegt. Vorteilhaft wird der Quarzglasstab exzentrisch in den Schmelztiegel eingeführt, so daß seine Längsachse nicht durch die Mitte des Schmelztiegels geht bzw. bei einer zylindrischen Form des Schmelztiegels im wesentlichen parallel zur dessen Zylinderachse versetzt ist. Die Exzentrizität ist dann vorteilhaft gleich dem Radius des ebenfalls als Zylinder ausgebildeten Quarzglasstabes. Zum Schmelzen der Quarzglasstabes wird dieser nicht bis auf den Boden des Schmelztiegels abgesenkt, sondern in einem gewissen Abstand vom Schmelztiegelboden gehalten, so daß die Schmelzhitze allseitig ungehindert an das freie, im Schmelztiegel befindliche Ende des Quarzglasstabes heran kommt. Im Verlauf des Abschmelzens wird der Quarzglasstab mit einer geeigneten und ggf. korrigierbaren Geschwindigkeit nachgeführt. Beim Erreichen der gewünschten Dicke der Quarzglasplatte werden die Nachführung des Quarzglasstabes eingestellt, die Fließtemperatur noch eine gewisse Zeit beibehalten, der Quarzglasstab von der Quarzplatte weg bewegt und dabei von seiner Halterung abgeschmolzen und danach die Erhitzung eingestellt. Vorteilhaft wird hierbei die Abschmelzstelle mit Inertgas bespült. Der gesamte Prozeß kann automatisiert erfolgen.

Für den Herstellungsprozeß ist es von Vorteil, wenn der Quarzglasstab und der Schmelztiegel zylindrisch ausgebildet sind. Der Quarzglasstab ist über eine Verjüngung und ein zwischengeschaltetes Haltestück mit einem Arm verbunden. An der Verjüngung erfolgt vorteilhaft das Abschmelzen beim Beendigen des Schmelzvorganges zur Plattenherstellung. Zur Exzentrizitätseinstellung ist der Arm günstigerweise teleskopisch gestaltet. Zur Durchführung der Relativbewegung zwischen Quarzglasstab und Schmelztiegel kann entweder der Quarzglasstab am Arm oder vorzugsweise der Schmelztiegel in einem Ofengehäuse oder es können beide drehbar gelagert sein. Befindet sich der Schmelztiegel im Ofengehäuse, so ist dieses vorteilhaft an seiner Innenseite mit Heizelementen in geeigneter Anordnung versehen. Zur Einführung des Quarzglasstabes in den Schmelztiegel sind das Ofengehäuse und der Heizraum mit Durchführungen versehen, von denen zumindest die Durchführung im Ofengehäuse mit Inertgas bespülbar ausgestaltet ist.

Das erfindungsgemäße Verfahren ist durch folgende Verfahrensschritte gekennzeichnet: Die vorzugsweise zylindrische Quarzglassäule bzw. der Quarzglasstab wird in einer innerhalb eines beheizbaren Ofengehäuses erwärmten Graphitform thermisch umgeformt. Hierzu wird das untere Ende des mittels einer Haltevorrichtung geführten Quarzglasstabes auf einen bestimmten Abstand über dem Graphitformboden im Ofen abgesenkt. Dieser Abstand kann 5 bis 20 mm betragen und dient der gleichmäßigen Erwärmung ebenso wie der Gewährleistung einer gewissen Sicherheit. Durch Erhitzung auf seine Fließtemperatur schmilzt der Quarzglasstab infolge seines Eigengewichtes ab und fließt auf den Formboden auf. Unter Fortsetzung der Erhitzung wird der Quarzglasstab mit definierter Geschwindigkeit (Verlauf) bis zu einer vorgewählten Höhenmarkierung weiter abgesenkt, die die Unterkante der Abschmelzstellung festlegt. Nach dem Erreichen dieser Höhenmarkierung wird der verbliebene Quarzglasstab in dieser Stellung eine bestimmte Zeit gehalten, bevor er mit definierter Geschwindigkeit bei gleichzeitigem Abschmelzen aus dem Ofen herausgezogen wird. Dabei wird keine Schmelze aus dem Schmelztiegel herausgezogen. Es findet zwischen dem Quarzglasstab und der Graphitform nach dem Aufschmelzbeginn eine rotatorische und/oder translatorische Relativbewegung rechtwinklig zur Absenkrichtung des Quarzglasstabes mit vorzugsweise 0,1 - 3 Umdrehungen pro Minute statt. Dabei können die geometrischen Achsen von Quarzglasstab und Graphitform vorzugsweise um den Radius des Quarzglasstabes gegeneinander versetzt sein. Durch diese Maßnahme, die auch dafür sorgt, daß Innenglas und Oberflächenglas des Quarzglasstabes nicht miteinander vermischt werden, hat die im Graphittiegel sich ausbildende Quarzglasplatte günstigere Homogenitätsverhältnisse als der Ausgangs-Quarzglasstab; d. h. der Querschnittsbereich definiert guter Qualität ist in der abgeschmolzenen Quarzglasplatte gegenüber dem Gesamtquerschnitt relativ größer als im Quarzglasstab. Unter Berücksichtigung der Höhenmarkierung ist in den Quarzglasstab eine Abschmelzstelle in Form einer Verjüngung oder eines eingeschweißten Zwischenstückes eingearbeitet worden, bis zu der das Quarzglas des Stabes zur Herstellung der Quarzglasplatte im Graphittiegel verwendet wird. Eine weitere Absenkung des Quarzglasstabes erfolgt dann nicht. Günstig ist es, neben dem Inneren des Ofens auch die Einführungsöffnung des Ofens für den Quarzglasstab und damit den Quarzglasstab oder den Halterungsstab für den Quarzglasstab an dieser Stelle mit Inertgas zu spülen. Dabei besteht der Quarzglasstab aus einem Material mit hoher bzw. mit für die zu erzeugende Quarzglasplatte ausreichender Qualität und der Halterungsstab oder die vorzugsweise an den Quarzglasstab angeschweißten entsprechenden Halterungselemente aus Materialien einer Qualität, die geringer sein kann als die des Quarzglasstabes.

Die Erfindung wird nachstehend anhand der schematischen Zeichnung eines Ausrührungsbeispiels näher erläutert. Es zeigen:
Fig. 1 einen Vertikalschnitt einer erfindungsgemäßen Vorrichtung und
Fig. 2 Gesamtbrechzahlhomogenitätsverläufe in Abhängigkeit von der Exzentrizität und Rotation eines Quarzglasstabes.

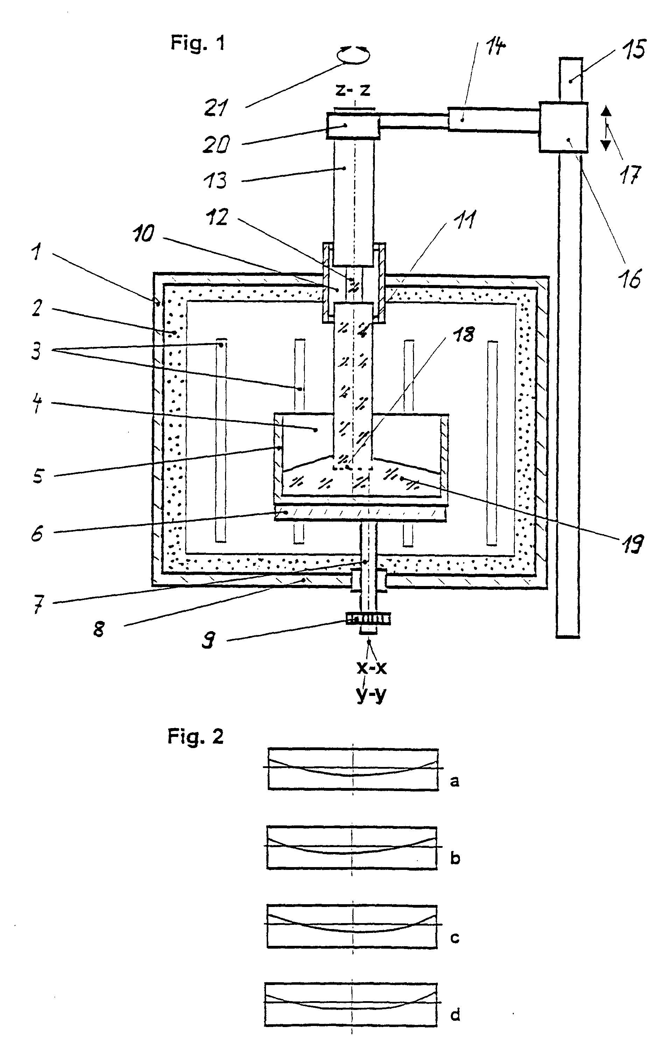

In Fig. 1 befindet sich in einem Ofengehäuse 1 mit einer Innenisolierung 2 und mit von dieser und voneinander beabstandet über den Umfang verteilt angeordneten Heizelementen 3 ein Graphittiegel 4, dessen Seitenwandung 5 zylindrisch ausgebildet und der exzentrisch auf einer Grundplatte 6 fest angeordnet. Die Grundplatte 6 ist am oberen Ende einer Welle 7 befestigt, welche im Boden 8 des Ofengehäuses 1 um eine Achse X-X drehbar gelagert ist, die parallel zur Zylinderachse Y-Y gerichtet ist und im vorliegenden Fall mit ihr zusammenfällt. Die Drehung der Welle 7 besorgen außerhalb des Ofengehäuses 1 befindliche Antriebsmittel, von denen ein mit der Welle 7 fest verkeiltes Zahnrad 9 sichtbar ist. Im oberen Teil des Ofengehäuses 1 ist eine Durchführung 10 für einen Quarzglasstab 11 vorgesehen, der mit seinem unteren Ende in den Graphittiegel 4 hineinragt und dessen anderes Ende an ein Verjüngungsstück 12 anschließt, das selbst wieder mit einem Haltestück 13 fest verbunden ist. Das Haltestück 13 ist an einem Teleskoparm 14 befestigt, der auf einem entlang einer Führung 15 parallel zu den Achsen X-X und Y-Y verstellbaren Schlitten 16, im wesentlichen rechtwinklig zur Führung 15 sich erstreckend, vorgesehen ist. Während zwischen dem Schlitten 16 und dem einen Ende des Teleskoparms 14 eine starre Verbindung besteht, ist das Haltestück 13 am anderen Ende des Teleskoparms 14 um eine Achse Z-Z drehbar gelagert, die im wesentlichen parallel zu der durch einen Doppelpfeil 17 gekennzeichneten Bewegungsrichtung des Schlittens 16 gerichtet ist. Der Drehung des Haltestückes 13 in Richtung eines Doppelpfeiles 21 dient eine am Teleskoparm 14 vorgesehene Drehvorrichtung 20. Es ist auch möglich, die Verbindung zwischen dem Haltestück 13 und dem Teleskoparm 14 so zu gestalten, daß der Quarzglasstab 11 nur vermöge seines Eigengewichtes auf dem Haltestück 13 aufsitzt. Dadurch kann er bei evtl. Stauungen entgegen der Abwärtsbewegung des Schlittens 16 in seiner Stellung verharren bzw. es kann, verbunden mit einer mit einer Kontrollmöglichkeit des Abschmelzens, die Schlittenabwärtsbewegung verlangsamt werden. Sämtliche genannten Achsen X-X, Y-Y und Z-Z sind parallel zueinander und in der Zeichnung parallel zur Zeichenebene gerichtet. Der Abstand der Achsen X-X und Z-Z voneinander soll etwa gleich dem Radius bzw. der halben Grundrißseitenlänge des Quarzglasstabes 11 sein.
Vor Beginn des in Fig. 1 dargestellten Abschmelzprozesses befindet sich das untere, mit 18 bezeichnete, gestrichelt gezeichnete Ende des Quarzglasstabs 11 in einem Abstand vom Boden des Graphittiegels 4. Die Heizelemente 3 werden in Tätigkeit versetzt, der Quarzglasstab 11 an seinem in den Graphittiegel 4 hineinragenden Ende auf seine Fließtemperatur erhitzt und das untere Ende 18 des Quarzglasstabes 11 in der dargestellten Stellung belassen bis das Quarzglas des Endes 18 auf den Boden des Graphittiegels 4 auffließt. Mit einer ersten Bedeckung seines Bodens wird der Graphittiegel 4 in Drehungen um die Achse X-X, ggf. der Quarzglasstab 11 in Drehungen um die Achse Z-Z versetzt und der Schlitten 16 im Maße des Abschmelzens des Quarzglasstabes 11 in Richtung des Doppelpfeiles 17 nach unten und damit der Quarzglasstab 11 in die Graphitform 4 hineinbewegt, und zwar solange, bis eine im Graphittiegel 4 entstehende Quarzglasplatte 19 die gewünschte Dicke hat, die sich im weiteren Prozeß gleichmäßig ausbildet. Danach wird zwar die Fließtemperatur zunächst beibehalten, jedoch der Quarzglasstab 11 vertikal nicht mehr nachgeführt. Nach einer gewissen Zeit (5 bis 60 min) wird der Schlitten 16 in Richtung des Doppelpfeils 17 nach oben bewegt, die Rotation des Schmelztiegels 4 um die Achse X-X eingestellt und dabei der Quarzglasstab 11 abgeschmolzen. Die Geschwindigkeit der Schlittenbewegung nach oben ist so bemessen, daß kein bereits abgeschmolzenes Quarzglas hoch gezogen wird. Nach dem Abschmelzen wird die Beheizung ausgeschaltet bzw. so geregelt, daß sich die Quarzglasplatte 19 im Graphittiegel 4 abkühlen kann.

In Fig. 2 sind in Diagrammen a bis d der Gesamtbrechzahlhomogenitätsverlauf der fertigen Quarzglasplatte 19 in der Graphitform 4 in Abhängigkeit von der Exzentrizität des Quarzglasstabes 11 gegenüber der Graphitform 4, dem Abstand der Achsen X-X und Z-Z voneinander, dargestellt. Im Diagramm a liegt keine Exzentrizität vor. Das Gebiet kleiner Brechzahländerungen ist auf einen kleinen Mittenbereich beschränkt. Im Diagramm b ist der Bereich kleiner Brechzahländerungen entsprechend der Achse Z-Z gegenüber der Achse X-X nach links verschoben und nach rechts auslaufend. Im Diagramm c ist der Bereich kleiner Brechzahländerungen nach rechts verschoben und nach links flach auslaufend. Das Diagramm d veranschaulicht schließlich die Auswirkung der exzentrischen und rotatorischen Einbringung der Schmelzmasse in die Graphitform 4. Es wird eine deutliche Vergrößerung des Bereichs geringer Brechzahländerungen erreicht.

Grundsätzlich wird durch eine Rotation des koaxial zum Schmelztiegel 4 angeordneten Quarzglasstabes 11 zwar der Mittenbereich nicht vergrößert, aber die Brechzahlhomogenität im Mittenbereich verbessert. Wird die Achse Z-Z des Quarzglasstabes 11 so verschoben, daß sie nicht mehr mit der Mitte bzw. Achse Y-Y des Schmelztiegels 4 koinzidiert, so wird der Bereich der Verbesserung der Brechzahlhomogenität darüber hinaus vergrößert. Dies kann auch dadurch erreicht werden, daß die Achsen X-X und Z-Z miteinander in Koinzidenz gehalten werden und der Schmelztiegel 4 auf der Grundplatte 6 seitlich so verschoben wird, daß seine geometrische Achse Y-Y mit keiner der beiden Achsen X-X und Z-Z zusammenfällt.

In anderen Ausführungsvarianten koinzidiert keine der Achsen X-X, Y-Y, Z-Z mit der anderen. Die Relativbewegung zwischen der Graphitform 4 und dem Quarzglasstab 11 durch Rotation des Quarzglasstabes um seine Achse Z-Z, durch Rotation der Graphitform um die Quarzstabachse Z-Z, durch Rotation der Graphitform um eine eigene Achse X-X, durch Translationsbewegung zwischen Graphitform und Quarzglasstab einzeln und in Kombination miteinander erfolgen. Die Ofenatmosphäre kann aus Inert- oder Edelgas bestehen. Auch kann bei entsprechenden Abdichtungsmaßnahmen im Ofengehäuse 1 ein Vakuum erzeugt werden. Die Beheizung des Ofengehäuses 1 kann durch Strahlung oder Induktion erfolgen; besonders im letzten Fall ist der gesonderte Heizraum 3 mit einer äußeren Isolierung von Bedeutung. Auch die Durchführung 10 kann, zumindest dem Graphittiegel 4 zugewandt, mit einer Zusatzheizung versehen sein.
Neben der Verbesserung der makroskopischen Homogenität erfolgt durch die Relativbewegung von Schmelztiegel 4 und Quarzglasstab 11 eine Verbesserung der mikroskopischen Homogenität, speziell der lokalen Homogenitätsgradienten, infolge der Verschiebung einzelner Volumenelemente und ihrer gegenseitigen Anordnung gegenüber ihrer Lage im Ausgangs-Quarzglasstab.

### Bezugszeichenliste

- 1: Ofengehäuse
- 2: Isolierung
- 3: Heizelemente
- 4: Grapittiegel (Schmelztiegel)
- 5: Seitenwandung
- 6: Grundplatte
- 7: Welle
- 8: Boden
- 9: Zahnrad
- 11: Quarzglasstab (Quarzglassäule)
- 12: Verjüngimgsstück
- 13: Haltestück (Halterung)
- 14: Teleskoparm
- 15: Führung
- 16: Schlitten
- 17, 21: Doppelpfeil
- 18: unteres Ende
- 19: Quarzglasplatte
- 20: Drehvorrichtung
- X-X, Y-Y, Z-Z: Achsen

## Patentansprüche

1. Verfahren zur Herstellung einer homogenen, schlierenfreien Quarzglasplatte (19) aus einem vollen Quarzglasstab (11), der parallel zu seiner Längsachse Z-Z in einen Schmelztiegel (4) abgesenkt wird, dessen Querschnitt größer ist als der Querschnitt des Quarzglasstabes (11) und der die Kontur der Quarzglasplatte (19) bestimmt, bei dem ferner der Quarzglasstab (11) im Schmelztiegel (4) auf seine Fließtemperatur erhitzt und nach Erreichen der Fließtemperatur bei Fortsetzung der Erhitzung der Quarzglasstab (11) so lange abgeschmolzen und abgesenkt wird, bis die Höhe des in den Schmelztiegel (4) fließenden Quarzglases der gewünschten Dicke der Quarzglasplatte (19) entspricht, dadurch gekennzeichnet, daß der Schmelztiegel (4) und der Quarzglasstab (11) während des Abschmelzvorganges eine quer zur Längsachse Z-Z gerichtete Relativbewegung zueinander erfahren.

2. Verfahren gemäß Anspruch 1, dadurch gekennzeichnet, daß die Relativbewegung von Schmelztiegel (4) und Quarzglasstab (11) beginnt, sobald das vom Quarzglasstab (11) abgeschmolzene Quarzglas den Boden des Schmelztiegels (4) bedeckt.

3. Verfahren gemäß Anspruch 1, dadurch gekennzeichnet, daß die Relativbewegung eine Rotationsbewegung um eine im wesentlichen parallel zur Längsachse Z-Z gerichtete Achse X-X ist.

4. Verfahren gemäß Anspruch 1, dadurch gekennzeichnet, daß der Quarzglasstab (11) im wesentlichen außermittig in den Schmelztiegel (4) eingeführt wird.

5. Verfahren gemäß Anspruch 4, dadurch gekennzeichnet, daß der Quarzglasstab (11) als Zylinder ausgebildet ist und im Abstand des Zylinderradiusses von der Schmelztiegelmitte in den Schmelztiegel (4) eingeführt wird.

6. Verfahren gemäß mindestens einem der vorstehenden Ansprüche, dadurch gekennzeichnet, daß die Abschmelzung des Quarzglasstabes (11) in einem endlichen Abstand von der Innenfläche des Bodens des Schmelztiegels (8) beginnt.

7. Verfahren gemäß mindestens einem der vorstehenden Ansprüche, dadurch gekennzeichnet, daß beim Erreichen der gewünschten Dicke der Quarzglasplatte (19) die Nachführung des Quarzglasstabes (11) und die quer zur Längsachse Z-Z gerichtete Relativbewegung eingestellt, die Fließtemperatur noch eine gewisse Zeit beibehalten, der Quarzglasstab (11) von der Quarzplatte (19) weg bewegt und abgeschmolzen und danach die Erhitzung eingestellt werden.

8. Vorrichtung zur Durchführung des Verfahrens gemäß den Ansprüchen 1 bis 7, mit einem beheizten Schmelztiegel (4) und einer Verstellvorrichtung, mit der ein Quarzglasstab (11) parallel zu seiner Längsachse (Z-Z) gegenüber dem Schmelztiegel (4) vertikal verstellbar angeordnet und auf diese Weise in den Schmelztiegel (4) abgesenkt werden kann, dadurch gekennzeichnet, daß die Verstellvorrichtung einen Arm (14) enthält, der mit einem Ende an einem entlang einer vertikalen Führung (15) verstellbaren Schlitten (16) befestigt ist, und daß der Arm (14) an seinem anderen Ende mit einer Drehvorrichtung (20) versehen ist, über die der Quarzglasstab (11) mit dem Arm (14) verbunden sein kann, und/oder daß der Schmelztiegel (4) mit Antriebsmitteln (9) versehen ist, wobei die Drehvorrichtung (20) den Quarzglasstab (11) um seine Längsachse (Z-Z) und die Antriebsmittel (9) den Schmelztiegel (4) um eine andere Achse (X-X) verdrehen und beide Achsen (Z-Z und X-X) im wesentlichen parallel zur Führung (15) aber nicht koaxial zueinander angeordnet sind.

9. Vorrichtung gemäß Anspruch 8, dadurch gekennzeichnet, daß der Quarzglasstab (11) außermittig in den Schmelztiegel (4) hineinragt und die Mitte des Schmelztiegels (4) mit der Drehachse X-X des Schmelztiegels (4) koinzidiert.

10. Vorrichtung gemäß Anspruch 8 oder 9, dadurch gekennzeichnet, daß der Schmelztiegel (4) und der Quarzglasstab (11) zylindrisch ausgebildet sind.

11. Vorrichtung gemäß Anspruch 8, dadurch gekennzeichnet, daß der Quarzglasstab (11) über ein Haltestück (13) und ein Verjüngungsstück (12) starr mit dem Antriebsmittel (20) des Armes (14) verbunden ist.

12. Vorrichtung gemäß Anspruch 8, dadurch gekennzeichnet, daß der Quarzglasstab (11) über das Haltestück (13) und das Verjüngungsstück (13) parallel zu seiner Längsachse flexibel mit dem Antriebsmittel (20) des Armes (14) verbunden ist.

13. Vorrichtung gemäß Anspruch 8, dadurch gekennzeichnet, daß der Arm (14) teleskopisch gestaltet ist.

14. Vorrichtung gemäß Anspruch 8, dadurch gekennzeichnet, daß der Quarzglasstab (11) um seine Längsachse Z-Z drehbar am Antriebsmittel (20) des Armes (14) verbunden ist.

15. Vorrichtung gemäß Anspruch 8, dadurch gekennzeichnet, daß sich die Antriebsmittel (9) zur Drehung des Schmelztiegels (4) außerhalb eines Ofengehäuses (1) befinden und durch den Gehäuseboden (8) hindurchgeführt sind.

16. Vorrichtung gemäß mindestens einem der vorstehenden Ansprüche, dadurch gekennzeichnet, daß der Schmelztiegel (4) sich in dem Ofengehäuse (1) befindet, das zwischen seiner Innenwand und dem Schmelztiegel (4) mit Heizelementen (3) versehen ist.

17. Vorrichtung gemäß Anspruch 16, dadurch gekennzeichnet, daß das Ofengehäuse (1) mit einer Durchführung (10) für den Quarzglasstab (11), das Verjüngungsstück (12) und das Haltestück (13) versehen ist.

18. Vorrichtung gemäß Anspruch 17, dadurch gekennzeichnet, daß die Durchführung (10) zusätzlich zum Innenraum des Ofengehäuses (1) mit Inertgas spülbar ist.

19. Vorrichtung gemäß Anspruch 8, dadurch gekennzeichnet, daß das Verjüngungsstück (12) des Quarzglasstabes (11) als Abschmelzstelle gestaltet ist.

## Claims

1. A method for producing a homogeneous streak-free quartz glass plate (19) from a solid glass rod (11), which is lowered parallel to its longitudinal axis Z-Z into a melting pot (4), the cross section of which is larger than the cross section of the quartz glass rod (11) and which determines the contour of the quartz glass plate (19), for which furthermore the quartz glass rod (11) in the melting pot (4) is heated to its flow temperature and, after the flow temperature is reached, heating of the quartz glass rod (11) is continued and the quartz glass rod (11) is melted off and lowered, until the level of the quartz glass, flowing in the melting pot (4), corresponds to the desired thickness of the quartz glass plate (19), characterized in that the melting pot (4) and the quartz glass rod (11) experience relative movement to one another, directed transversely to the longitudinal axis Z-Z, during the melting process.

2. The method of claim 1, characterized in that the movement of the melting pot (4) relative to the quartz glass rod (11) commences as soon as the quartz glass, melted from the quartz glass rod (11), covers the bottom of the melting pot (4).

3. The method of claim 1, characterized in that the relative movement is a rotational movement about an axis X-X directed essentially parallel to the longitudinal axis Z-Z.

4. The method of claim 1, characterized in that the quartz glass rod (11) is introduced essentially eccentrically into the melting pot (4).

5. The method of claim 4, characterized in that the quartz glass rod (11) is constructed as a cylinder and introduced into the melting pot (4) at a distance from the center of the latter, corresponding to the cylindrical radius.

6. The method of at least one of the preceding claims, characterized in that the melting of the quartz glass rod (11) commences at a finite distance from the bottom of the melting pot (4).

7. The method of at least one of the preceding claims, characterized in that the advance of the quartz glass rod (11), after the desired thickness of the quartz glass plate (19) is reached, and the relative movement, directed transversely to the Z-Z longitudinal axis, are suspended, the flow temperature is still retained for a certain time, the quartz glass rod (11) is moved away from the quartz plate (19) and melted off and, after that, the heating is suspended.

8. A device for carrying out the method as claimed in claims 1 to 7, comprising a heated melting pot (4) and a displacement unit adapted for displacing a quartz glass rod (11) displaceably arranged in parallel to its longitudinal axis Z-Z and vertically relative to the melting pot (4), thus being adapted to be lowered into said melting pot (4), characterized in that said displacement unit includes an arm (14) having a first end and a second end, said first end being secured to a slide (16), which is displaceable along a vertical guide (15), said second end being provided with a rotating device (20), said rotating device (20) being adapted to connect said quartz glass rod (11) with said arm (14), and/or that the melting pot (4) is provided with drive means (9), whereby said quartz glass rod (11) is rotated about its longitudinal axis Z-Z by said rotating device (20) and said melting pot (45) is rotated about a further axis X-X by said drive means (9), both axes Z-Z and X-X being arranged substantially in parallel to the guide (15), however, in non-coaxial relation to each other.

9. The device of claim 8, characterized in that the quartz glass rod (11) protrudes eccentrically into the melting pot (4) and the center of the melting pot (4) coincides with the axis of rotation X-X of the melting pot (4).

10. The device of claims 8 or 9, characterized in that the melting pot (4) and the quartz glass rod (11) are constructed cylindrically.

11. The device of claim 8, characterized in that the quartz glass rod (11) is connected rigidly with the rotating means (20) of the arm (14) over a holding piece (13) and a piece with a constriction (12).

12. The device of claim 8, characterized in that the quartz glass rod (11) is connected parallel to its X-X longitudinal axis and flexibly with the rotating means (20) of the arm (14) over the holding piece (13) and a piece with a constriction (12).

13. The device of claim 8, characterized in that the arm (14) is constructed telescopically.

14. The device of claim 8, characterized in that the quartz glass rod (11) is rotatably arranged about its Z-Z longitudinal axis and is connected with the rotating means (20) of the arm (14).

15. The device of claim 8, characterized in that the driving means (9) for rotating the melting pot (4) are outside of a furnace housing (1) and are passed through the bottom (8) of the housing (1).

16. The device of at least one of the preceding claims, charakterized in that the melting pot (4) is located in the furnace housing (1), which is provided between its inner wall and the melting pot (4) with heating elements (3).

17. The device of claim 16, charakterized in that the furnace housing (1) is provided with a lead-through (10) for the quartz glass rod (11), the piece with a constriction (12) and the holding piece (13).

18. The device of claim 17, charakterized in that the lead through (10) can be flushed with an inert gas additionally to the interior of the furnace housing (1).

19. The device of claim 8, charakterized in that the piece with constriction (12) of the quartz glass rod (11) is the spot of melting-off.

## Revendications

1. Le procédé destiné à la fabrication d'un plateau de verre quartzeux (19) homogène et exempt de stries, à partir d'un bâton plein (11) en verre quartzeux, lequel est abaissé dans le sens de l'axe longitudinal Z-Z jusqu'à ce qu'il atteigne le niveau de la cuve dont la section, plus grande que la section du bâton en verre quartzeux (11), devient déterminante pour le contour du plateau en verre quartzeux (19) à obtenir, où le bâton en verre quartzeux (11) sera chauffé à la température d'écoulement et, la température atteinte, commencera à écouler et à se déposer dans la cuvette, (4) formant ainsi le plateau jusqu'à ce que l'épaisseur requise de celui-ci soit obtenue, est caractérisé en ce que la cuvette (4) et le bâton en verre de quartz (11) sont mis en mouvement pendant l'opération de fusion et de manière transversale par rapport à l'axe longitudinal Z-Z et dans le sens opposé, l'un par rapport à l'autre.

2. Le procédé suivant la revendication 1 est caractérisé en ce que la cuvette (4) se déplace par rapport au bâton de verre quartzeux (11) dès que le verre quartzeux fondu coulant du bâton en verre chauffé commence à couvrir le fond de la cuvette (4).

3. Le procédé suivant la revendication 1 est caractérisé en ce que le déplacement du bâton en verre quartzeux par rapport celui de la cuvette est un mouvement de rotation autour de l'axe X-X orienté dans l'essentiel dans le sens de l'axe Z-Z longitudinal.

4. Le procédé suivant la revendication 1 est caractérisé en ce que le bâton de verre quartzeux (11) entre dans la cuvette (4) de manière excentrique.

5. Le procédé suivant la revendication 4 est caractérisé en ce que le bâton de verre quartzeux (11) a la forme d'un cylindre et qu'il plonge dans la cuvette (4) à une distance du centre égale au rayon du cylindre.

6. Le procédé suivant au moins une des revendications précédentes est caractérisé en ce que le bâton de verre quartzeux (11) commence à fondre à une distance limitée par rapport à la surface intérieure du fonds de la cuvette (8).

7. Le procédé suivant au moins une des revendications précédentes est caractérisé en ce qu'au moment où l'épaisseur requise du plateau en verre quartzeux (19) est atteinte, le mouvement du bâton de verre quartzeux (11) et le déplacement dans le sens perpendiculaire à l'axe longitudinal Z-Z sont arrêtés, tandis que la température d'écoulement reste encore maintenue pendant un certain temps, le bâton en verre quartzeux (11) étant éloigné du plateau en quartz (19) pour finir sa fonte, avant qu'enfin le chauffage soit arrêté.

8. Le système destiné à réaliser le procédé suivant les revendications 1 à 7, comprenant une cuvette de fusion (4) à chauffer, et un mécanisme de réglage permettant de déplacer de manière parallèle à l'axe longitudinal (Z-Z) un bâton en verre quartzeux (11) en face d'une cuvette de fusion (4) afin de pouvoir le faire descendre jusqu'au niveau de la cuvette, est caractérisé en ce que le mécanisme de réglage est doté d'un bras (14) dont une des extrémités est reliée à un chariot (16) réglable se déplaçant dans un guidage vertical (15) et que l'autre extrémité est dotée d'un mécanisme vireur (20) par l'intermédiaire duquel le bâton en verre quartzeux (11) est relié au bras (14), et que la cuvette de fusion (4) est pourvue de moyens d'entraînement (9) , le mécanisme vireur (20) faisant tourner le bâton de verre quartzeux (11) autour de son axe longitudinal (Z-Z) et les moyens d'entraînement (9) faisant tourner la cuvette de fusion (4) autour d'un autre axe (X-X) et que les deux axes (Z-Z et X-X) sont disposés en parallèle par rapport au guidage (15) mais qu'ils ne sont pas disposés de manière coaxiale par rapport à l'autre.

9. Le procédé suivant la revendication 8 est caractérisé en ce que le bâton en verre quartzeux (11) entre dans la cuvette de fusion (4) de manière excentrique et que le centre de la cuvette (4) coïncide avec l'axe de révolution X-X de la cuvette de fusion (4).

10. Le mécanisme suivant la revendication 8 ou 9 est caractérisé en ce que le bâton de verre quartzeux (11) de même que la cuvette (4) ont une forme cylindrique.

11. Le système suivant la revendication 8 est caractérisé en ce que le bâton en verre quartzeux est solidaire du moyen d'entraînement (20) du bras (14) par l'intermédiaire d'une pièce de raccord (13) et d'une pièce allongée (12) de manière rigide.

12. Le système suivant la revendication 8 est caractérisé en ce que le bâton en verre quartzeux est relié de manière souple au moyen d'entraînement (20) du bras (14), parallèlement à l'axe, par l'intermédiaire d'une pièce raccord (13) et d'une pièce allongée (13).

13. Le mécanisme suivant la revendication 8 ou 9 est caractérisé en ce que le bras (14) est conçu comme un système télescopique.

14. Le système suivant la revendication 8 est caractérisé en ce que le bâton de verre quartzeux (11) est raccordé au moyen d'entraînement (20) du bras (14) de manière à permettre la rotation autour de son axe longitudinal Z-Z.

15. Le système suivant la revendication 8 est caractérisé en ce que les moyens d'entraînement (9) assurant la révolution de la cuvette de fusion (4) sont disposés à l'extérieur de l'enceinte du four (1) et que la liaison se fait en passant par le sol de l'enceinte (8).

16. Le système suivant au moins une des revendications précédentes est caractérisé en ce que la cuvette de fusion (4) est disposée à l'intérieur de l'enceinte du four (1) comprenant les éléments chauffants (3)entre la paroi intérieure et la cuvette de fusion (4).

17. Le système suivant la revendication 16 est caractérisé en ce que l'enceinte du four (1) est dotée d'un passage (10) permettant l'entrée du bâton en verre quartzeux (11), de la pièce allongée (12) et de la pièce raccord (13).

18. Le mécanisme suivant la revendication 17 est caractérisé en ce que le passage (10) est conçu de sorte que son espace intérieur puisse être lavé au moyen d'un gaz inerte.

19. Le mécanisme suivant la revendication 8 est caractérisé en ce que la pièce allongée (12) du bâton de verre quartzeux (11) est le point exact où la fusion a lieu.
